# EUROPEAN PATENT APPLICATION

(11) **EP 1 110 680 A1**
(43) Date of publication of application: **27.06.2001**
(21) Application number: 99830791.2
(22) Date of filing: 22.12.1999
(51) Int. Cl.: B25J 5/04, B21J 15/10, B23Q 1/01

(54) **Portal wagon robot-carrier structure**

(71) Applicant: Bisiach, Bruno, 10078 Venaria (TO) (IT)
(72) Inventor: Bisiach, Bruno, 10078 Venaria (TO) (IT)
(74) Representative: Robba, Pierpaolo

(57) **Abstract**

The invention concerns a robot carrier structure with movable portal wagon (2), comprising two side bearing pillars (4, 6) and an upper beam (8, 10) onto which at least one movable industrial robot (12, 14) with several axes of movements is mounted, for processing a workpiece (60) fastened to a corresponding support (50). The upper beam is made of two sloping sections (8, 10), joined at their upper ends (20) and coupled, at their lower ends, to the side bearing pillars (4, 6). The support (50) to which the workpiece (60) is fastened is a turnable support capable of overturning the workpiece being processed by about 180°, thereby allowing the robot to operate in the upper region of the portal, where straddle is limited and precision is higher

## Description

The present invention concerns a robot carrier structure with portal wagon.

More particularly the invention concerns a movable portal wagon used in industrial processing of large-sized curved workpieces, such as for instance parts of aircraft bodies, parts of railway coaches, and so on.

In industrial processing using robots, such as for instance plate boring, riveting or welding, the robot is generally designed as a substantially stationary operating unit, in front of which the workpiece is fed from a conveying line along which further processing machines or units are arranged.

Although in high and very high output lines the use of several stationary robots - each carrying out a part of the overall work on workpieces moving past the robot - is generally efficient and advantageous, in low or very low output lines or in lines with diversified production that system has proven to be completely disadvantageous.

Robot carrier structures are already known which are movable on rails by means of which a robot, equipped with a plurality of tools for carrying out different operations, can longitudinally displace on the workpiece to be processed, thereby reaching all parts of workpieces even of large size, as is the case for instance walls or panels of railway coaches. Moreover, the same rails allow the robot sequentially to process different pieces, even different from one another.

Patent Application EP 168 850 discloses for instance a robot carrier structure consisting of portal wagon movable on rails and supported at its flanks by two carriages each comprising two wheels longitudinally coupled by motion transmission means and actuated in synchronism by an electric motor. The portal wagon structure allows the robot arm to displace transversally to the rail direction, thereby reaching the side walls of the workpiece being processed.

Yet, when using such movable structures, the processing of large-sized curved workpieces is difficult, especially when the tools being used require a passive counterpart, such as for instance for plate boring, riveting and welding operations. In effect the robot arm, which is movable on the upper beam of the portal wagon, cannot reach all parts, both internal and external, of the workpiece being processed.

The object of the invention is to provide a robot carrier structure with movable portal wagon, which allows carrying out a plurality of different operations on large-sized curved workpieces.

This object is achieved through a robot carrier structure with portal wagon having a broken upper beam consisting of two inclined portions, each equipped with a slidable robotised arm.

The above and other objects are achieved by the robot carrier structure with inclined portal wagon made in accordance with the invention, as claimed in the appended claims.

The portal wagon made in accordance with the invention can advantageously be used in conjunction with tools requiring an active part and a passive counterpart.

The above and other objects of the invention will become more apparent from the description of a preferred embodiment, with reference to the accompanying drawings, in which:
- Fig. 1 shows, in front view, a robot carrier structure with inclined portal wagon made in accordance with the present invention, in conjunction with a fixed support for the workpiece being processed;
- Figs. 2, 3 and 4 show, in front view, a robot carrier structure with inclined portal wagon made in accordance with the present invention, in three subsequent steps of the processing of a curved workpiece fastened to a turnable support.

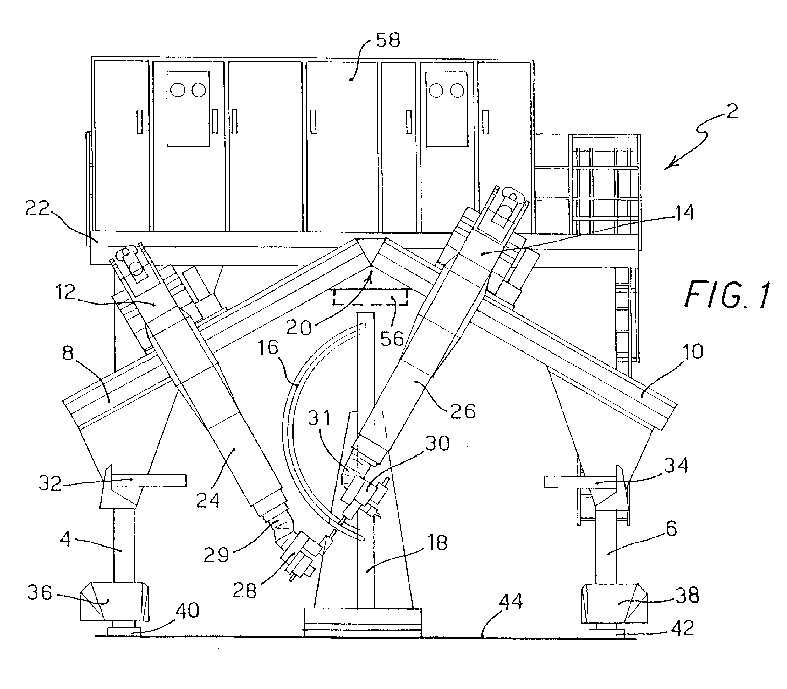

Referring to Fig. 1, reference numeral 2 denotes a portal wagon structure on which two movable industrial robots 12, 14 are mounted. Portal wagon 2 is movable on two rails 40, 42 running through the working area on floor 44.

A workpiece 16 being processed is fastened to a support 18, which in turn rests on, or preferably is fastened to floor 44. Workpiece 16 is a large-sized curved workpiece, e.g. with a length of 8 to 10 meters and a height of 2 to 4 meters, such as a part of aircraft body. An aircraft body actually is made of several arc pieces joined together to form a tubular element, and each piece must be processed along the arc to weld or rivet the external and internal plates. In order to process workpiece 16 over its whole length, portal wagon 2 moves along rails 40, 42 while support 18 remains integral with the floor. Similar conditions may occur during processing of vehicle body pieces, e. g. of railway coaches, or generally of large-sized curved pieces.

Portal wagon structure 2 comprises two side bearing pillars 4, 6 and an upper beam 8, 10 on which two movable industrial robots 12, 14 with several axes of movement are mounted. The upper beam is made of two sloping sections 8, 10 joined at their upper ends 20 and coupled, at their lower ends, to side bearing pillars 4, 6. Each side pillar 4, 6 is supported by a respective carriage 36, 38 provided with wheels arranged to run on a rail 40, 42 and actuated by an electric motor mounted on the same carriage 36, 38.

Each section 8, 10 of the upper beam carries an industrial robot arranged to perform a translational movement on the beam section to which it is coupled. The movements of portal wagon 2 and robots 12, 14 are controlled by a central control unit 58, located either on the same wagon 2 on bridge 22, as shown in Fig. 1, or on the floor.

Each robot 12, 14 is equipped with an extensible arm 24, 26 of which the end bears a tool holding head 28, 30 provided with a mechanism for the automatic change of the working tools. Thanks to the mechanism for the automatic change of the working tools, known in se and widely used in the field of industrial robots, the robot is capable of picking up and automatically fastening on its own head a new tool, after having deposited the previously mounted tool. To this aim, portal wagon 2 is equipped with two tool magazines 32, 34 located on bearing pillars 4, 6 of the structure, in which magazines the different tools are placed.

In the alternative, if it is required that the two robots mutually exchange their tools, it is possible to locate a common tool magazine 56 in correspondence with upper junction point 20 of the two beam sections 8, 10. Actually, such point 20 can be easily reached by both arms 24, 26 of robots 12, 14 without interfering with the workpiece being processed. Such an arrangement can be advantageous when the two robots are to work with different tools, or when the tools are very expensive.

The two sloping sections 8, 10 have a 30° inclination relative to the plane of floor 44. Such inclination allows robot arms 24, 36 to easily reach all parts, both internal and external, of workpiece 16 being processed, thanks also to articulation 29, 31 provided on each head 28, 30. Even when the tools used require a passive counterpart, as is for instance the case for plate boring, riveting and welding operations, thanks to the inclination of beam sections 8, 10 robots 12, 14 can move in synchronised manner, without interfering with workpiece 16, and carry out a complete processing of the workpiece.

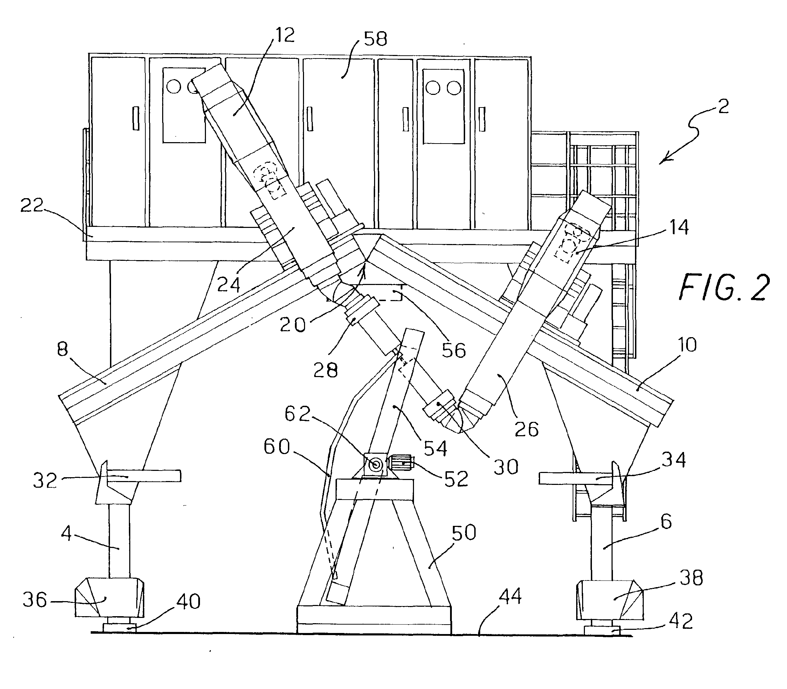

Figs. 2, 3 and 4 are front views of a robot carrier structure with inclined portal wagon made in accordance with the present invention, in three subsequent steps of the processing of a curved workpiece fastened to a turnable support.

The portal wagon structure shown in Figs. 2, 3 and 4 is identical to the structure previously shown in Fig. 1. The structure comprises two side bearing pillars 4, 6 and an upper beam 8, 10 on which the two movable industrial robots 12, 14 are mounted. The upper beam is made of two sloping sections 8, 10 joined at their upper ends 20. Structure 2 is supported by wheeled carriages 36, 38, actuated by electric motors.

Each section 8, 10 of the upper beam carries an industrial robot arranged to perform a translational movement on the beam section to which it is coupled. The movements of portal wagon 2 and robots 12, 14 are controlled by a central control unit 58.

To allow the robots to change, or to mutually exchange, the tools, portal wagon 2 is equipped with two tool magazines 32, 34 located on bearing pillars 4, 6 of the structure, or with a common tool magazine 56, located in correspondence with upper junction point 20 of the two beam sections 8, 10.

A workpiece 60 being processed is fastened to a turnable support, having a base 50, resting on or fastened to floor 44, and a movable frame 54, hinged at point 62 on base 50 and arranged to overturn, by about 180 degrees, workpiece 60 being processed. The rotation of frame 54 to which workpiece 60 being processed is fastened is carried out by means of an electric motor 52, controlled by central control unit 58, in synchronism with the movements of the robot and of portal wagon 2 itself.

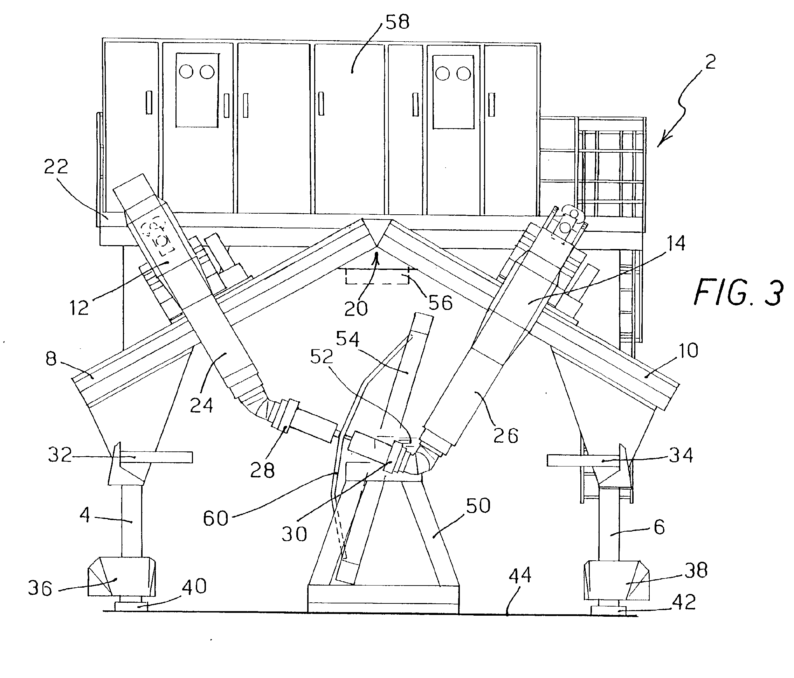

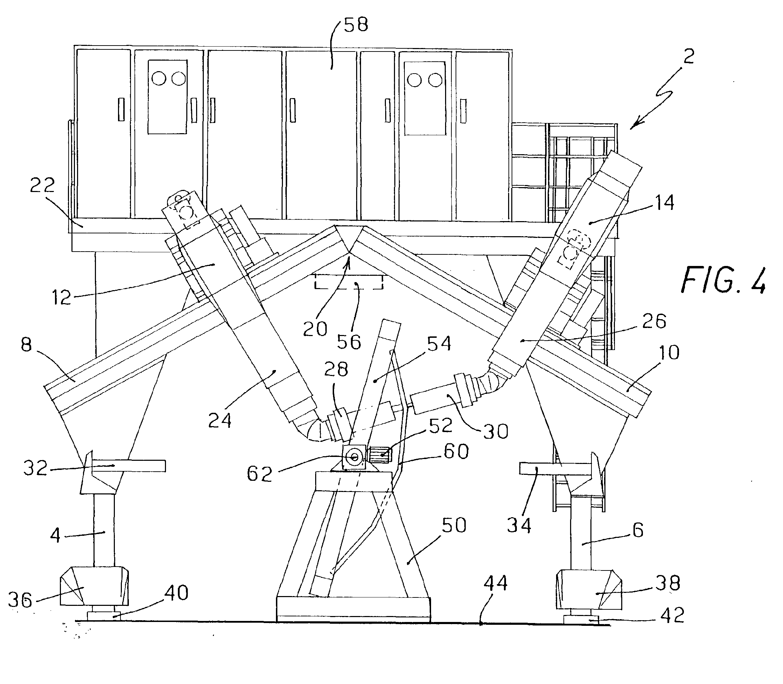

More particularly, Fig. 2 shows the beginning of the first processing step, Fig. 3 shows an intermediate step, immediately before workpiece 60 is overturned, and Fig. 4 shows the second processing step, which is carried out on the workpiece having been overturned.

Therefore, workpiece 60 is processed first in its upper half, and then it is overturned and processed in its lower half. Thus arms 24, 25 of the robots always operate in the upper region of the portal, where straddle is limited and precision is higher.

While frame 54, and hence workpiece 60, is being turned, the robots are moved away from the workpiece, in order they do not interfere with the workpiece rotation, and thereafter they are moved again close to the workpiece, in order to resume immediately the processing. That operation, which is carried out according to a fully automated procedure, is very fast and in practice it does not affect the overall workpiece processing time. Moreover, while the workpiece is being overturned, the robots can carry out a tool change, by using tool magazines 32, 34 located on bearing pillars 4, 6.

## Claims

1. Robot carrier structure with movable portal wagon (2), comprising two side bearing pillars (4, 6) and an upper beam (8, 10) onto which at least one movable industrial robot (12, 14) with several axes of movements is mounted, for processing one or more workpieces (16; 60) fastened to corresponding supports (18; 50),
characterised in that said upper beam is made of two sloping sections (8, 10) joined at their upper ends (20) and coupled, at their lower ends, to said side bearing pillars (4, 6).

2. Robot carrier structure according to claim 1, wherein each upper beam section (8, 10) carries an industrial robot with several axes of movements, each robot (12, 14) being arranged to perform a translational movement along at least part of the length of the respective beam section (8, 10).

3. Robot carrier structure according to claim 2, wherein each robot (12, 14) has a head (28, 30) equipped with a mechanism for the automatic change of the working tools.

4. Robot carrier structure according to claim 3, wherein each side pillar (4, 6) bears a tool magazine (32, 34), which contains different tools which the robot is arranged to pick up, automatically fastening them to its head, and to put down.

5. Robot carrier structure according to claim 3, wherein at the junction point (20) of the two beam sections (8, 10) a tool magazine (56) is provided, which contains different tools which the robot is arranged to pick up, automatically fastening them to its head, and to put down, so as to allow the mutual tool exchange among the two robots (12, 14).

6. Robot carrier structure according to claim 1, wherein said sloping sections (8, 10) have an inclination of 30° with respect to the plane of the floor (44).

7. Robot carrier structure according to any preceding claim, wherein each side pillar (4, 6) is supported by a carriage (36, 38) provided with wheels arranged to run on a rail (40, 42) and actuated by an electric motor mounted on the same carriage.

8. Robot carrier structure according to any of claims 1 to 6, wherein the workpiece (60) is fastened to a turnable support (50, 54) capable of overturning the workpiece being processed by about 180°, thereby allowing the robots to operate in the upper region of the portal, where straddle is limited and precision is higher.

9. Method of processing large-sized pieces (60) of bodies through a robot carrier structure (2) as claimed in any preceding claim, comprising the steps of:
- fastening said piece (60) of body to a support (50, 54) capable of being overturned;
- performing by means of said robot a first processing cycle on a first portion of said piece (60) which is closer to the robot carrier structure;
- overturning said support (50, 54) so that the remaining portion of said piece (60), not yet processed, takes a position substantially corresponding to the position occupied by said first portion, already processed;
- performing by means of said robot a second processing cycle on said second portion not yet processed, thereby completing the processing phase of said piece (60).

10. Method according to claim 9, wherein said processing phase comprises welding or riveting or boring said piece.
